(19) Europäisches Patentamt
European Patent Office
Office européen des brevets

(11) EP 4 813 921 A1

(12) EUROPEAN PATENT APPLICATION
published in accordance with Art. 153(4) EPC

(43) Date of publication:
**30.09.2026 Bulletin 2026/40**

(21) Application number: **24893867.2**

(22) Date of filing: **01.10.2024**

(51) International Patent Classification (IPC):
***C01G 39/02*** *(2006.01)*

(52) Cooperative Patent Classification (CPC):
**C01G 39/02**

(86) International application number:
**PCT/JP2024/035082**

(87) International publication number:
**WO 2025/109873 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.11.2023 JP 2023199113**

(71) Applicant: **DIC Corporation**
**Tokyo 174-8520 (JP)**

(72) Inventors:
- **MURATA, Hideyuki**
  **Sakura-shi, Chiba 285-8668 (JP)**
- **HIRABAYASHI, Koki**
  **Sakura-shi, Chiba 285-8668 (JP)**
- **YAGI, Naoto**
  **Sakura-shi, Chiba 285-8668 (JP)**
- **YUAN, Jianjun**
  **Sakura-shi, Chiba 285-8668 (JP)**
- **IMAMURA, Shoji**
  **Sakura-shi, Chiba 285-8668 (JP)**

(74) Representative: **TBK**
**Bavariaring 4-6**
**80336 München (DE)**

# (54) METHOD FOR PRODUCING MOLYBDENUM TRIOXIDE FINE PARTICLES

(57) Provided is a method for producing molybdenum trioxide fine particles, whereby molybdenum trioxide fine particles can be produced with a high recovery percentage through simple ON/OFF control and selective heating, even with low energy consumption. The method for producing molybdenum trioxide fine particles according to the present invention includes a vaporization step of irradiating molybdenum trioxide with electromagnetic waves to heat and vaporize the molybdenum trioxide, and a particle formation step of cooling the vaporized molybdenum trioxide in an unheated atmosphere to form particles and thereby obtain molybdenum trioxide fine particles. The frequency of the electromagnetic waves is in a range of from 300 to 30000 MHz.

[Fig. 1]

10
ELECTROMAGNETIC WAVES
6
1
8
AIR, INERT GAS
EXHAUST
3
2



Processed by Luminess, 75001 PARIS (FR)

## Description

### TECHNICAL FIELD

The present invention relates to a method for producing molybdenum trioxide fine particles.
The present application claims the rights of priority on the basis of Japanese Patent Application No. 2023-199113, filed in Japan on November 24, 2023, the contents of which are incorporated herein by reference.

### BACKGROUND ART

Molybdenum trioxide fine particles have a wide range of applications, including as a catalyst, as an additive for steel and corrosion-resistant alloys, as a raw material for molybdenum metals and compounds, and as an antibacterial and antiviral agent.
Molybdenum trioxide melts at a temperature of 800°C or higher and is sublimable. Therefore, molybdenum trioxide can be solidified by cooling sublimated molybdenum trioxide gas or by bringing the sublimated molybdenum trioxide gas into contact with air or an inert gas at a temperature of 800°C or lower to form particles (for example, see Patent Document 1).

### CITATION LIST

### PATENT DOCUMENT

Patent Document 1: JP 6455747 B

### SUMMARY OF INVENTION

### TECHNICAL PROBLEM

However, in typical gas heating using a burner or electric heating using a heater, the atmosphere around the molybdenum trioxide to be heated is also heated. Therefore, even if the input of the heating energy is blocked, the sublimation of molybdenum trioxide cannot be suppressed. As a result, it has been difficult to efficiently produce molybdenum trioxide fine particles having a fine particle size from molybdenum trioxide as a raw material. Thus, a demand exists for a production method whereby molybdenum trioxide fine particles can be produced with a high recovery percentage even with low energy consumption.

As a result of intensive studies, the present inventors discovered that molybdenum trioxide (powder) absorbs electromagnetic waves such as microwaves well, and is quickly heated and vaporized, and that since the atmosphere is not heated by the electromagnetic waves, vaporization is immediately suppressed by blocking the input of electromagnetic wave energy, and thus the amount of vaporization of the molybdenum trioxide can be controlled, and as a result, molybdenum trioxide fine particles can be efficiently produced. That is, in the present embodiment, heating by electromagnetic irradiation is easily controlled to be ON or OFF, the irradiation intensity can be easily controlled, and molybdenum trioxide can be selectively heated without heating the atmosphere. Accordingly, an object of the present embodiment is to provide a method for producing molybdenum trioxide fine particles, whereby molybdenum trioxide fine particles can be produced with a high recovery percentage even with low energy consumption.

### SOLUTION TO PROBLEM

The present embodiment is based on the above findings by the present inventors and includes the following aspects as means for solving the above problems.

[1] A method for producing molybdenum trioxide fine particles, the production method including:

a vaporization step of irradiating molybdenum trioxide with electromagnetic waves to heat and vaporize the molybdenum trioxide; and
a particle formation step of cooling the vaporized molybdenum trioxide in an unheated atmosphere to form particles of the molybdenum trioxide and
thereby obtain molybdenum trioxide fine particles, wherein
a frequency of the electromagnetic waves is in a range of from 300 to 30000 MHz.

[2] The method for producing molybdenum trioxide fine particles according to [1], wherein the frequency of the

electromagnetic waves is in a range of from 900 to 3000 MHz.

[3] The method for producing molybdenum trioxide fine particles according to [1] or [2], wherein the molybdenum trioxide contains from 0.1 to 50 wt.% of a metal oxide.

[4] The method for producing molybdenum trioxide fine particles according to [3], wherein the metal oxide is at least one selected from the group consisting of aluminum hydroxide, boehmite, aluminum oxide, silica, titanium oxide, and iron oxide.

[5] The method for producing molybdenum trioxide fine particles according to any one of [1] to [4], wherein the molybdenum trioxide fine particles have an average particle size of from 10 nm to 100 μm.

[6] The method for producing molybdenum trioxide fine particles according to any one of [1] to [5], wherein the molybdenum trioxide fine particles have a BET specific surface area of from 0.01 $m^2/g$ to 500 $m^2/g$.

[7] The method for producing molybdenum trioxide fine particles according to any one of [1] to [6], wherein the molybdenum trioxide fine particles include an α crystal structure.

[8] The method for producing molybdenum trioxide fine particles according to any one of [1] to [7], wherein the molybdenum trioxide fine particles further include a β crystal structure.

## ADVANTAGEOUS EFFECTS OF INVENTION

According to the present embodiment, a method for producing molybdenum trioxide fine particles can be provided whereby molybdenum trioxide fine particles can be produced with a high recovery percentage through simple ON/OFF control and selective heating, even with low energy consumption.

## BRIEF DESCRIPTION OF DRAWINGS

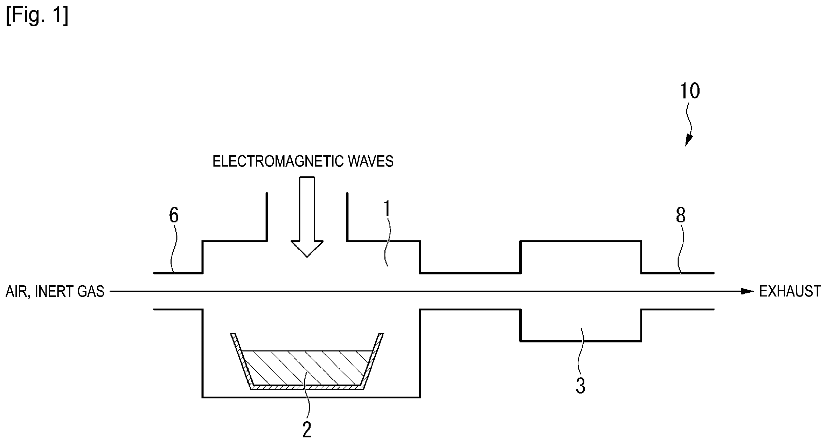

FIG. 1 is a schematic view of an example of an apparatus used for producing molybdenum trioxide fine particles according to an embodiment of the present invention.

## DESCRIPTION OF EMBODIMENTS

Method for Producing Molybdenum Trioxide Fine Particles

A method for producing molybdenum trioxide fine particles according to one embodiment of the present invention includes the following two steps. (I) Vaporization step: A step of irradiating molybdenum trioxide with electromagnetic waves to heat and vaporize the molybdenum trioxide. (II) Particle formation step: A step of cooling the vaporized molybdenum trioxide in an unheated atmosphere to form particles of the molybdenum trioxide and thereby obtain molybdenum trioxide fine particles. The frequency of the electromagnetic waves is in a range of from 300 to 30000 MHz.

This method for producing molybdenum trioxide fine particles of the present embodiment can be suitably carried out using, for example, a production apparatus 10 illustrated in FIG. 1 for producing molybdenum trioxide fine particles.

FIG. 1 is a schematic view of an example of an apparatus used for producing molybdenum trioxide fine particles of the present embodiment. An apparatus that can radiate the electromagnetic waves (hereinafter, referred to as an "electromagnetic irradiation apparatus", not illustrated) is arranged above a chamber 1. The production apparatus 10 for producing molybdenum trioxide fine particles includes: a chamber 1 in which the molybdenum trioxide is heated (hereinafter, may be referred to as "electromagnetic wave heating") by irradiating the molybdenum trioxide placed in a container 2 with electromagnetic waves generated by an electromagnetic irradiation apparatus, and the molybdenum trioxide is thereby vaporized; and a particle collection device 3 that is connected to the chamber 1 and converts, into fine particles, the molybdenum trioxide vapor vaporized by the irradiation. At this time, the chamber 1 and the particle collection device 3 are connected to each other. The chamber 1 has an outside air inlet 6 at the left end, and the particle collection device 3 has an exhaust port 8 at the right end. Moreover, an exhaust device (not illustrated) serving as an air blowing means is connected to the air inlet 6. The production apparatus 1 may have an external cooling device (not illustrated) that enables optional control of the conditions for cooling the molybdenum trioxide vapor generated from the chamber 1.

Molybdenum Trioxide Fine Particles

The molybdenum trioxide fine particles of the present embodiment contain an aggregate of primary particles that include the crystal structure of molybdenum trioxide. The molybdenum trioxide fine particles of the present embodiment can also be referred to as a molybdenum trioxide powder of the present embodiment. The crystal structure may be, for example, an α crystal structure, a β crystal structure, or both an α crystal structure and a β crystal structure. The molybdenum trioxide fine particles of the present embodiment have good reactivity with other compounds such as sulfur, for example, in comparison with typical molybdenum trioxide fine particles.

In the present embodiment, the α crystal structure of molybdenum trioxide can be confirmed by the presence of a

peak of the (021) plane of the α crystal of $MoO_3$ (2θ: around 27.32°, _entry No. 166363 (Inorganic Crystal Structure Database, ICSD)). Moreover, the β crystal structure can be confirmed by the presence of a peak attributed to the (011) plane of the β crystal of $MoO_3$ in a profile obtained from powder X-ray diffraction (XRD) using Cu-Kα radiation as an X-ray source. The above peak is a peak of entry No. 86426 (Inorganic Crystal Structure Database, ICSD) near 2θ: 23.01°.

The average particle size of the molybdenum trioxide fine particles of the present embodiment is preferably from 10 nm to 100 μm. The average particle size of the molybdenum trioxide fine particles of the present embodiment can be measured by, for example, a known method for measuring the particle size distribution. The average particle size of the molybdenum trioxide fine particles of the present embodiment is more preferably 10 nm or greater, and still more preferably 20 nm or greater. Moreover, the average particle size thereof may be 100 μm or less, 10 μm or less, or 1 μm or less. When the average particle size of the molybdenum trioxide fine particles of the present embodiment is within the above preferable range, for example, in the case of producing molybdenum disulfide using the molybdenum trioxide fine particles, the reactivity of the molybdenum trioxide fine particles with sulfur tends to be more favorable.

The BET specific surface area of the molybdenum trioxide fine particles is preferably from 0.01 $m^2/g$ to 500 $m^2/g$. In the molybdenum trioxide fine particles of the present embodiment, the BET specific surface area is more preferably 1 $m^2/g$ or greater, more preferably 10 $m^2/g$ or greater, and even more preferably 20 $m^2/g$ or greater, from the viewpoint of further improving the reactivity with other compounds such as sulfur, for example. In addition, in the molybdenum trioxide fine particles of the present embodiment, the BET specific surface area may be 500 $m^2/g$ or less, 200 $m^2/g$ or less, or 100 $m^2/g$ or less, from the viewpoint of facilitating production.

In the molybdenum trioxide fine particles of the present embodiment, the shape of the primary particles in a two dimensional image captured with a transmission electron microscope (TEM) may be a particle shape, a spherical shape, a plate shape (sheet shape), a needle shape, a string shape, or a ribbon shape when observed visually or in an image photograph, or may include a combination of these shapes. In the present embodiment, the primary particles of the molybdenum trioxide fine particles may have a ribbon shape or a sheet shape having a thickness on a nano order. The shapes of 50 primary particles of the molybdenum trioxide particles are preferably of an average size of length (vertical) x width (horizontal) in a range of from 5 to 2000 nm x from 5 to 2000 nm, more preferably of an average size in a range of from 5 to 1000 nm x from 5 to 1000 nm, and particularly preferably of an average size in a range of from 10 to 500 nm x 10 to 500 nm.

The β crystal structure of molybdenum trioxide can also be confirmed by the presence of peaks at wave numbers of 773, 848 $cm^{-1}$, and 905 $cm^{-1}$ in a Raman spectrum obtained from Raman spectroscopy. The α crystal structure of molybdenum trioxide can be confirmed by the presence of peaks at wave numbers 663, 816 $cm^{-1}$ and 991 $cm^{-1}$.

The molybdenum trioxide fine particles of the present embodiment have good reactivity with sulfur, and are therefore useful as a raw material for molybdenum disulfide ($MoS_2$). In addition, the molybdenum trioxide fine particles of the present embodiment can be formed with high purity, and thus can be applied in an industrial grade. Moreover, the molybdenum trioxide fine particles of the present embodiment are expected to be applied in various catalyst applications.

Vaporization Step

The vaporization step in the method for producing molybdenum trioxide fine particles of the present embodiment is a step of irradiating molybdenum trioxide with electromagnetic waves to heat the molybdenum trioxide (hereinafter, referred to as "electromagnetic wave heating") and vaporize the molybdenum trioxide. The frequency of the electromagnetic waves is in a range of from 300 to 30000 MHz.

Molybdenum Trioxide

The molybdenum trioxide used as a raw material in the vaporization step according to the present embodiment is a precursor for the molybdenum trioxide fine particles, and for example, commercially available α-crystal molybdenum trioxide can be used.

The molybdenum trioxide serving as a precursor of the molybdenum trioxide fine particles may be molybdenum trioxide formed by subjecting a molybdenum oxide precursor compound to electromagnetic wave heating. That is, the method for producing molybdenum trioxide fine particles of the present embodiment may further include, before the vaporization step, a step of forming molybdenum trioxide by subjecting a molybdenum oxide precursor compound to electromagnetic wave heating. In the vaporization step, molybdenum trioxide fine particles may be produced using the formed molybdenum trioxide.

The molybdenum oxide precursor compound is not particularly limited as long as the compound forms molybdenum trioxide vapor when subjected to electromagnetic wave heating. Examples of the molybdenum oxide precursor compound include molybdenum trioxide, metallic molybdenum, molybdenum dioxide, molybdenum disulfide, ammonium molybdate, phosphomolybdic acid ($H_3PMo_{12}O_{40}$), 12-molybdosilicic acid ($H_4SiMo_{12}O_{40}$), aluminum molybdate, silicon molybdate, magnesium molybdate ($MgMo_nO_{3n+1}$ (n = 1 to 3)), sodium molybdate ($Na_2Mo_nO_{3n+1}$ (n = 1 to 3)),

titanium molybdate, iron molybdate, potassium molybdate ($K_2Mo_nO_{3n+1}$ (n = 1 to 3)), zinc molybdate, boron molybdate, lithium molybdate ($Li_2Mo_nO_{3n+1}$ (n = 1 to 3)), cobalt molybdate, nickel molybdate, manganese molybdate, chromium molybdate, cesium molybdate, barium molybdate, strontium molybdate, yttrium molybdate, zirconium molybdate, and copper molybdate. These molybdenum oxide precursor compounds may be used alone, or two or more types may be used in combination. The form of the molybdenum oxide precursor compound is not particularly limited, and may be, for example, a powder form such as molybdenum trioxide, or a liquid form such as an aqueous ammonium molybdate solution. The molybdenum oxide precursor compound is preferably in the form of a powder having good handling properties and energy efficiency.

In addition, when ammonium molybdate is used as the molybdenum oxide precursor compound, the ammonium molybdate is converted into thermodynamically stable molybdenum trioxide when subjected to electromagnetic wave heating, and therefore the molybdenum oxide precursor compound to be vaporized becomes the molybdenum trioxide.

Other Metal Compounds

In the vaporization step according to the present embodiment, a metal compound such as another metal oxide may be further contained in addition to the molybdenum trioxide. In the case in which another metal oxide is contained in addition to the molybdenum trioxide, the metal oxide is preferably blended at an amount of from 0.1 to 50 wt.%, more preferably from 1 to 20 wt.%, and still more preferably from 5 to 10 wt.%, per 100 wt.% of the total of the molybdenum trioxide and the other metal oxide.

The metal compound other than molybdenum trioxide is not particularly limited. Examples of the metal compound other than molybdenum trioxide include an aluminum compound, a silicon compound, a titanium compound, a magnesium compound, a sodium compound, a potassium compound, a zirconium compound, an yttrium compound, a zinc compound, a copper compound, and an iron compound. Among these, an aluminum compound, a silicon compound, a titanium compound, a magnesium compound, or an iron compound is preferably used, and an aluminum compound, a silicon compound, a titanium compound, or an iron compound is more preferably used.

Although molybdenum trioxide and the metal compound other than molybdenum trioxide may form an intermediate, even in this case, the intermediate is decomposed by electromagnetic wave heating, and molybdenum trioxide can be vaporized in a thermodynamically stable form.

As the metal compound other than molybdenum trioxide, among the above metal compounds, an aluminum compound is preferably used from the viewpoint of preventing damage to a reaction apparatus to be used. In addition, in order to improve the purity of the molybdenum trioxide fine particles, a metal compound other than the molybdenum trioxide may also not be used.

Examples of the aluminum compound include aluminum chloride, aluminum sulfate, basic aluminum acetate, aluminum hydroxide, boehmite, pseudoboehmite, transition aluminum oxides ($\gamma$-aluminum oxide, $\delta$-aluminum oxide, $\theta$-aluminum oxide, etc.), $\alpha$-aluminum oxide, and mixed aluminum oxide having two or more crystal phases. The aluminum compound is preferably at least one selected from the group consisting of aluminum hydroxide, boehmite, and aluminum oxide.

Examples of the silicon compound include silicon oxides such as silica.

Examples of the titanium compound include titanium oxides such as titanium oxide.

Examples of the iron compound include iron oxides such as iron oxide.

The metal oxide is preferably at least one selected from the group consisting of aluminum hydroxide, boehmite, aluminum oxide, silica, titanium oxide, and iron oxide.

Electromagnetic Irradiation

The frequency of the electromagnetic waves used in the vaporization step according to the present embodiment is in a range of from 300 to 30000 MHz. The frequency of the electromagnetic waves is preferably in a range of from 900 to 3000 MHz.

The electromagnetic waves according to the present embodiment can be generated by using, for example, an electromagnetic wave generator that is used in a known electromagnetic wave heating device. Examples of the electromagnetic wave generator include the MRK-3050 available from Kyoeisha Electric Kilns Co., Ltd., and the AMU-RUSH microwave heating device available from Motoyama Co., Ltd.

The vaporization step according to the present embodiment may be a step of heating and vaporizing the molybdenum trioxide by irradiating the molybdenum trioxide with the electromagnetic waves using an electromagnetic

wave heating device.
The electromagnetic wave heating device may include an electromagnetic wave generator and a heating unit. The heating unit includes, for example, the chamber 1 and the container 2 of the production apparatus 10 illustrated in FIG. 1 and used for producing molybdenum trioxide particles.

In the vaporization step according to the present embodiment, the intensity of the electromagnetic waves to be radiated can be appropriately selected according to details such as the form, composition, and weight of the raw material to be irradiated, the arrangement mode, and the installation location. The intensity of the electromagnetic wave to be radiated can be adjusted by, for example, the temperature of the raw material to be irradiated or the vaporization amount. When the irradiation intensity of the electromagnetic waves is to be adjusted according to the temperature of the raw material to be irradiated, for example, the irradiation intensity can be adjusted while measuring the (surface or internal) temperature (sometimes referred to as electromagnetic wave heating temperature) of the raw material during irradiation with the electromagnetic waves. The electromagnetic wave heating temperature varies depending on the molybdenum trioxide and metal compound used as raw materials, the molybdenum trioxide fine particles to be generated as the desired product, and the like. The electromagnetic wave heating temperature is preferably 800°C or higher, more preferably 850°C or higher, and even more preferably 900°C or higher. The electromagnetic wave heating temperature may be 1100°C or lower or 1000°C or lower.
Also, when the molybdenum trioxide serving as a raw material in the vaporization step is derived from the molybdenum oxide precursor compound, the electromagnetic wave heating temperature is preferably set to a temperature at which the molybdenum oxide precursor compound can generate molybdenum trioxide. In addition, in a case in which another metal compound is contained, for example, in a case in which an aluminum compound is used as the metal compound, aluminum molybdate may be formed as an intermediate, and thus the electromagnetic wave heating temperature is preferably a temperature at which the intermediate can be decomposed. In this case, the electromagnetic wave heating temperature is, for example, preferably from 500°C to 1500°C, more preferably from 600°C to 1550°C, and still more preferably from 700°C to 1600°C.

The electromagnetic irradiation (heating) time is not particularly limited, and may be, for example, 10 minutes or longer, from 20 minutes to 10 hours, or from 30 minutes to 5 hours. Here, the irradiation time can be optionally selected according to the amount of molybdenum trioxide to be treated.

The irradiation (heating) with electromagnetic waves may be carried out continuously for a certain period of time, or may be carried out intermittently by turning the irradiation on and off. The irradiation intensity of the electromagnetic waves at that time may be constant, or the irradiation intensity of the electromagnetic waves may be varied while maintaining the electromagnetic wave heating temperature. The production method of the present embodiment is characterized in that ON/OFF of the electromagnetic waves can be controlled more easily than in a typical heating method using an electric furnace or the like.

The temperature increase rate of the electromagnetic wave heating temperature differs depending on details such as the molybdenum oxide precursor compound to be used, the metal compound, and the desired characteristics of the molybdenum trioxide fine particles. The temperature increase rate of the electromagnetic wave heating temperature is preferably from 1 to 200°C/min, more preferably from 2 to 100°C/min, and still more preferably from 5 to 50°C/min.

In the vaporization step according to the present embodiment, the internal pressure near the raw material (for example, in the case of the example illustrated in FIG. 1, the atmospheric pressure of the chamber 1) is not particularly limited, and may be a positive pressure or a reduced pressure. In addition, from the viewpoint of suitably discharging molybdenum trioxide from the container of the vaporization step to the container of the particle formation step, the vaporization step is preferably performed under reduced pressure. The specific degree of pressure reduction is preferably from -5000 to -10 Pa, more preferably from -2000 to -20 Pa, and still more preferably from -1000 to -50 Pa. When the degree of pressure reduction is -5000Pa or greater, a high level of airtightness and mechanical strength of the container (for example, in the case of the example illustrated in FIG. 1, the chamber 1) used in the vaporization step are not excessively required, and production costs can be reduced, which is preferable. On the other hand, when the degree of pressure reduction is -10 Pa or less, clogging from the molybdenum oxide precursor compound at the discharge port of the container in the vaporization step can be prevented, which is preferable.

A gas may be blown in the vaporization step during the electromagnetic wave heating of the vaporization step. In this case, the temperature of the gas to be blown is preferably from 5 to 500°C, and more preferably from 10 to 100°C.

The blowing speed of the gas is preferably from 1 to 500 L/min, and more preferably from 10 to 200 L/min, with respect to 100 L of the effective volume of the container in the vaporization step.

The temperature of the vaporized molybdenum trioxide vapor varies depending on the type of molybdenum trioxide that is used, but is preferably from 200 to 2000°C, and more preferably from 400 to 1500°C. When the temperature of the vaporized molybdenum trioxide vapor is 2000°C or lower, normally, the molybdenum trioxide vapor tends to be easily formed into fine particles by the blowing of outside air (0 to 100°C) in a cooling pipe.

The discharge rate of the molybdenum trioxide vapor discharged from the container in the vaporization step can be controlled by the amount of the molybdenum trioxide to be used, the amount of the metal compound that is blended as

necessary, the temperature of the electromagnetic wave heating, the blowing of the gas into the container in the vaporization step, and the diameter of the exhaust port. The discharge rate of the molybdenum trioxide vapor from the container in the vaporization step and into the cooling pipe varies depending on the cooling capability of the cooling pipe, but is preferably from 0.001 to 100 g/min, and more preferably from 0.1 to 50 g/min.

The content of the molybdenum trioxide vapor contained in the gas discharged from the container in the vaporization step is preferably from 0.01 to 1000 mg/L, and more preferably from 1 to 500 mg/L.

Particle Formation Step

The particle formation step in the production method of the present embodiment is a step of cooling the vaporized molybdenum trioxide in an unheated atmosphere to form particles of the molybdenum trioxide and thereby obtain molybdenum trioxide fine particles.

To cool the molybdenum trioxide vapor, for example, a cooling pipe (not illustrated) may be disposed inside the particle collection device 3 illustrated in FIG. 1 or between the particle collection device 3 and the chamber 1. The cooling is carried out by setting the cooling pipe to a low temperature. In this case, examples of the cooling means include cooling by blowing a gas into the cooling pipe as described above, cooling using a cooling mechanism included in the cooling pipe, and cooling using an external cooling device.

The cooling temperature (temperature of the cooling pipe) is not particularly limited, but is preferably from -100 to 600°C, and more preferably from -50 to 400°C.

The cooling rate of the molybdenum trioxide vapor is not particularly limited, but is preferably from 100 to 100000°C/s, and more preferably from 1000 to 50000°C/s. It should be noted that as the cooling rate of the molybdenum trioxide vapor is increased, molybdenum trioxide fine particles having a smaller particle size and a larger specific surface area tend to be obtained.

In a case in which the cooling means is cooling by blowing a gas into the cooling pipe, the temperature of the gas to be blown is preferably from - 100 to 300°C, and more preferably from -50 to 100°C.

Moreover, the blowing speed of the gas is preferably from 0.1 to 20 $m^3$/min, and more preferably from 1 to 10 $m^3$/min. When the blowing speed of the gas is 0.1 $m^3$/min or faster, a high cooling rate can be realized, and clogging of the cooling pipe can be prevented, which is preferable. On the other hand, when the blowing speed of the gas is 20 $m^3$/min or slower, an expensive first blowing means (such as an exhauster) is not required, and the production cost can be reduced, which is preferable.

**EXAMPLES**

Hereinafter, the present invention will be described more specifically on the basis of examples, but the present invention is not limited to the following examples.

Raw Materials, Etc.

Molybdenum trioxide: available from Taiyo Koko Co., Ltd., average particle size of 5 μm
Aluminum hydroxide: available from Nippon Light Metal Co., Ltd.

Method for Evaluating Recovery Percentage of Molybdenum Trioxide Fine Particles

The recovery percentage of the molybdenum trioxide fine particles was determined by the following equation.

(Amount (g) of recovered molybdenum trioxide fine particles)/(amount (g) of charged molybdenum trioxide powder) * 100 = recovery percentage (%)

Method for Evaluating Power Consumption Per 1 kg of Molybdenum Trioxide

(Output value (kW·hr) of cumulative power meter of heating device)/(weight of molybdenum trioxide (1 kg))

Example 1

An amount of 100 g of molybdenum trioxide (available from Taiyo Koko Co., Ltd., average particle size: 5 μm) was placed in an alumina crucible, and the crucible was then placed in a stainless steel chamber equipped with an electromagnetic irradiation port, a gas inlet, a gas exhaust port, and a particle collection filter. Outside air was supplied to the chamber at a flow rate of 10 L/min using a blower. Subsequently, the molybdenum trioxide was irradiated with electromagnetic waves of a frequency of 2450 MHz at an intensity of 1000 W from an electromagnetic irradiation port at the top of the chamber until the surface temperature of the molybdenum trioxide reached 850°C. After the surface temperature reached 850°C, the electromagnetic irradiation was continued so as to maintain a surface temperature of 800°C through ON/OFF control of the electromagnetic irradiation intensity, and after 75 minutes, a rapid decrease in temperature was confirmed, and it was considered that the molybdenum trioxide in the crucible had volatilized. The electromagnetic irradiation was immediately stopped, the inside of the crucible was checked, and it was confirmed that almost no molybdenum trioxide raw material remained. Subsequently, the molybdenum trioxide fine particles captured on the particle collection filter were collected. The recovery percentage of the molybdenum trioxide fine particles formed into fine particles was 90%. The cumulative amount of power of the applied electromagnetic waves was 0.5 kW·hr, and the amount of power consumption was 5 kW·hr/kg per 1 kg of the molybdenum trioxide raw material.

Example 2

Molybdenum trioxide fine particles were obtained in the same manner as in Example 1 with the exception that nitrogen gas was supplied at a rate of 2 L/min using a cylinder, and the molybdenum trioxide was irradiated with electromagnetic waves having a frequency of 900 MHz. The amount of power of the electromagnetic waves required for the production of molybdenum oxide fine particles was 0.7 kW·hr, and the amount of power consumption was 7 kW·hr/kg per 1 kg of the molybdenum trioxide raw material. The recovery percentage of the molybdenum trioxide fine particles was 88%.

Example 3

Molybdenum trioxide fine particles were obtained in the same manner as in Example 1 with the exception that a mixture of 50 g of molybdenum trioxide (available from Taiyo Koko Co., Ltd., average particle size of 5 μm) and 50 g of aluminum hydroxide (available from Nippon Light Metal Co., Ltd.) was used. The molybdenum trioxide fine particles captured on the particle collection filter were collected. The cumulative power consumption of electromagnetic waves required for the production of molybdenum oxide fine particles was 0.6 kW·hr, and the amount of power consumption was 12 kW·hr/kg per 1 kg of the molybdenum trioxide raw material. The recovery percentage of the molybdenum trioxide was 85%.

Comparative Example 1

Referring to the production method described in Example 1 of Patent Document 1, molybdenum oxide fine particles were produced by electric heating (SiC heater (1000 W)) using 100 g of molybdenum trioxide (available from Taiyo Koko Co., Ltd., average particle size of 5 μm) in an alumina crucible. The molybdenum trioxide fine particles captured on the particle collection filter were recovered, and the recovery percentage was 70%. The cumulative amount of power used for the heating was 2.1 kW·hr, and heating power of 21 kW·hr/kg was required per 1 kg of molybdenum trioxide. It was confirmed that in the production of 1 kg of molybdenum oxide fine particles, the energy consumption was higher in comparison to the use of electromagnetic irradiation.

Discussion

From the results of Examples 1 and 2, it is found that because molybdenum trioxide (powder) absorbs electromagnetic waves such as microwaves (Example 1: frequency of 2450 MHz, Example 2: frequency of 900 MHz) well and is rapidly heated and vaporized by the increase in heat, and because the atmosphere is not heated by the electromagnetic waves, vaporization is immediately suppressed by cutting off the input of electromagnetic energy, and therefore the vaporization amount of the molybdenum trioxide can be controlled. As a result, molybdenum trioxide fine particles having a fine particle size were successfully produced at a high recovery percentage. That is, the atmosphere (air or an inert gas such as nitrogen) around the molybdenum trioxide did not absorb electromagnetic waves and was therefore at a low temperature, while only molybdenum trioxide was heated and vaporized by sublimation. The vaporized molybdenum trioxide was immediately cooled in the atmosphere or cooled by being mixed with an atmospheric gas (air, inert gas) supplied from the outside, and was thereby formed into particles.

For example, advantageous results were obtained for both the recovery percentage and the power consumption per 1 kg of the molybdenum trioxide in comparison to Comparative Example 1 in which a firing method using a typical electric furnace was used.

In Example 3, aluminum hydroxide or boehmite was blended with the molybdenum trioxide raw material. In this case, both molybdenum trioxide fine particles and an oxide (alumina) were obtained. It is thought that as a result, the melting and liquefaction of molybdenum trioxide can be suppressed, and corrosiveness can be reduced.

## REFERENCE SIGNS LIST

1 Chamber
2 Container
3 Particle collection device
6 Air inlet
8 Exhaust port
10 Production apparatus (production apparatus for molybdenum trioxide particles)

## Claims

**1.** A method for producing molybdenum trioxide fine particles, the production method comprising:

a vaporization step of irradiating molybdenum trioxide with electromagnetic waves to heat and vaporize the molybdenum trioxide; and
a particle formation step of cooling the vaporized molybdenum trioxide in an unheated atmosphere to form particles of the molybdenum trioxide and thereby obtain molybdenum trioxide fine particles,
a frequency of the electromagnetic waves being in a range of from 300 to 30000 MHz.

**2.** The method for producing molybdenum trioxide fine particles according to claim 1, wherein the frequency of the electromagnetic waves is in a range of from 900 to 3000 MHz.

**3.** The method for producing molybdenum trioxide fine particles according to claim 1 or 2, wherein the molybdenum trioxide contains from 0.1 to 50 wt.% of a metal oxide.

**4.** The method for producing molybdenum trioxide fine particles according to claim 3, wherein the metal oxide is at least one selected from the group consisting of aluminum hydroxide, boehmite, aluminum oxide, silica, titanium oxide, and iron oxide.

**5.** The method for producing molybdenum trioxide fine particles according to claim 1 or 2, wherein the molybdenum trioxide fine particles have an average particle size of from 10 nm to 100 $\mu$m.

**6.** The method for producing molybdenum trioxide fine particles according to claim 1 or 2, wherein the molybdenum trioxide fine particles have a BET specific surface area of from 0.01 $m^2/g$ to 500 $m^2/g$.

**7.** The method for producing molybdenum trioxide fine particles according to claim 1 or 2, wherein the molybdenum trioxide fine particles include an $\alpha$ crystal structure.

**8.** The method for producing molybdenum trioxide fine particles according to claim 1 or 2, wherein the molybdenum trioxide fine particles further include a $\beta$ crystal structure.

[Fig. 1]

10
8
EXHAUST
3
1
ELECTROMAGNETIC WAVES
2
6
AIR, INERT GAS

**INTERNATIONAL SEARCH REPORT**

International application No. **PCT/JP2024/035082**

**A. CLASSIFICATION OF SUBJECT MATTER**

***C01G 39/02***(2006.01)i
FI: C01G39/02

According to International Patent Classification (IPC) or to both national classification and IPC

**B. FIELDS SEARCHED**

Minimum documentation searched (classification system followed by classification symbols)

C01G39/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2013/170678 A1 (EXPLOITER MOLYBDENUM CO., LTD.) 21 November 2013 (2013-11-21) entire text, all drawings | 1-8 |
| A | JP 2013-159497 A (JAPAN ATOMIC ENERGY AGENCY) 19 August 2013 (2013-08-19) entire text, all drawings | 1-8 |
| A | WO 2022/202758 A1 (DIC CORPORATION) 29 September 2022 (2022-09-29) entire text, all drawings | 1-8 |
| A | WO 2020/246551 A1 (NATIONAL UNIVERSITY CORPORATION KANAZAWA UNIVERSITY) 10 December 2020 (2020-12-10) entire text, all drawings | 1-8 |

☐ Further documents are listed in the continuation of Box C.　　☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 November 2024** | **10 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/035082**

| Patent document cited in search report | Publication date (day/month/year) | Patent family member(s) | Publication date (day/month/year) |
|---|---|---|---|
| WO 2013/170678 A1 | 21 November 2013 | JP 2015-523195 A<br>entire text, all drawings<br>US 2015/0144480 A1<br>entire text, all drawings<br>CN 103418323 A | |
| JP 2013-159497 A | 19 August 2013 | (Family: none) | |
| WO 2022/202758 A1 | 29 September 2022 | (Family: none) | |
| WO 2020/246551 A1 | 10 December 2020 | US 2022/0219236 A1<br>entire text, all drawings<br>CN 113924162 A<br>KR 10-2022-0016841 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023199113 A
- JP 6455747 B